# EUROPÄISCHE PATENTSCHRIFT

(11) **EP 3 959 647 B1**
(45) Veröffentlichungstag und Bekanntmachung des Hinweises auf die Patenterteilung: **13.03.2024**
(21) Anmeldenummer: 20729042.0
(22) Anmeldetag: 27.05.2020
(51) Int. Cl.: G06V 20/56, G06V 20/59, G09G 5/38, G09G 5/399

(54) **LAGERICHTIGE EINBLENDUNG EINER ZUSATZINFORMATION AUF EINER ANZEIGEEINHEIT EINES FAHRZEUGS**
DISPLAYING ADDITIONAL INFORMATION IN THE CORRECT POSITION ON A DISPLAY UNIT OF A VEHICLE
INSERTION À LA POSITION CORRECTE D'UNE INFORMATION SUPPLÉMENTAIRE SUR UNE UNITÉ D'AFFICHAGE D'UN VÉHICULE

(30) Priorität: 20.06.2019 DE 102019209016
(43) Veröffentlichungstag der Anmeldung: 02.03.2022
(73) Patentinhaber: Volkswagen AG, 38440 Wolfsburg (DE)
(72) Erfinder: TÜMLER, Johannes, 39167 Wellen (DE); LAMPE, Sebastian, 49205 Hasbergen (DE); LUTZ, Malte, 38126 Mascherode (DE); WITTKÄMPER, Michael, 38106 Braunschweig (DE)
(86) Internationale Anmeldenummer: PCT/EP2020/064621
(87) Internationale Veröffentlichungsnummer: WO 2020/254075

(56) Entgegenhaltungen:
- WO-A1-2019/057496
- DE-A1-102012 214 903
- DE-A1-102015 109 027
- DE-A1-102016 009 333
- GB-A- 2 559 606

## Beschreibung

Die Erfindung betrifft das technische Gebiet von Fahrerinformationssystemen, die auch unter dem Begriff Infotainmentsystem bekannt sind. Dabei geht es im Besonderen um den Einsatz einer HUD-Anzeigeeinheit, mit der Zusatzinformationen in das Sichtfeld des Fahrers eingeblendet werden können. Die Erfindung betrifft weiterhin eine entsprechend ausgelegte Vorrichtung zur Durchführung des Verfahrens und ein entsprechend ausgelegtes Fahrzeug.

Zur Zeit wird intensiv an Technologien gearbeitet, die später ein autonomes Fahren ermöglichen sollen. Ein erster Ansatz ist dabei, den Fahrer nicht komplett von seinen Aufgaben zu entlasten, sondern dafür Sorge zu tragen, dass der Fahrer jederzeit die Steuerung des Fahrzeuges übernehmen kann. Der Fahrer nimmt außerdem Überwachungsfunktionen wahr. Durch neuere Technologien im Bereich der Fahrerinformationssysteme, wie Head-Up Display (HUD) und Datenbrillen, ist es möglich, den Fahrer besser über das Geschehen im Umfeld seines Fahrzeuges zu informieren.

Für die nahe Zukunft ist deshalb davon auszugehen, dass systemseitig durch den Einsatz neuerer Technologien (Fahrzeug-zu-Fahrzeug-Kommunikation, Einsatz von Datenbanken, Backend-Anbindung, Cloud-Dienste, Server-Einsatz, Fahrzeugsensorik, etc.) umfassende Informationen über Objekte (insb. Fahrzeuge) im sichtbaren und verdeckten / nicht sichtbaren Umfeld des eigenen Fahrzeugs verfügbar sein werden. Im Bereich Fahrzeugsensorik werden insbesondere die folgenden Komponenten genannt, die eine Umfeldbeobachtung ermöglichen: RADAR-Geräte entsprechend Radio Detection and Ranging, LIDAR-Geräte, entsprechend Light Detection and Ranging, hauptsächlich für den Bereich Abstandserfassung / -warnung, und Kameras mit entsprechender Bildverarbeitung für den Bereich der Objekterkennung. Diese Daten über die Umwelt können somit als Basis für systemseitige Fahrempfehlungen, Warnungen, etc. herangezogen werden. Beispielsweise sind so Anzeigen/Warnungen darüber denkbar, in welche Richtung (möglicherweise in die eigene Trajektorie) ein anderes, umgebendes Fahrzeug abbiegen will.

Die Fahrzeug-zu-Fahrzeug-Kommunikation ist mittlerweile auch mittels Mobilkommunikation mit Systemen wie LTE entsprechend Long Term Evolution oder 5G möglich. Hier wurde von der Organisation 3GPP eine Spezifikation mit Namen LTE PC5 verabschiedet. Als Alternative stehen auf WLAN-Technologie beruhende Systeme für die Fahrzeug-Direktkommunikation zur Verfügung, insbesondere das System nach WLAN p, entsprechend IEEE 802.11p. Solche Systeme sind relevant für das Gebiet des "kooperativen" oder "autonomen Fahrens".

Aufgrund der derzeitigen Entwicklung hin zu höheren Autonomiestufen, wo aber viele Fahrzeuge nach wie vor noch vom Fahrer gesteuert werden, ist davon auszugehen, dass entsprechende zusätzliche Informationen mittelfristig bereits für manuell geführte Fahrzeuge und nicht erst langfristig für hochautomatisierte Systeme genutzt werden können.

Für die Fahrer-Fahrzeug-Interaktion stellt sich hierbei die Frage, wie diese Informationen so dargestellt werden können, dass ein echter Mehrwert für den menschlichen Fahrer entsteht und er die bereitgestellten Informationen auch schnell, respektive intuitiv, verorten kann. Folgende Lösungen in diesem Bereich sind dabei schon aus dem Stand der Technik bekannt.

Eine Zukunftsvision in der Automobilbranche ist es, die Windschutzscheibe des eigenen Fahrzeugs mit virtuellen Elementen bespielen zu können, um dem Fahrer einige Vorteile zu ermöglichen. Genutzt wird die sogenannte "Augmented Reality"-Technologie (AR) oder "Mixed Reality" (MR)-Technologie. Weniger geläufig ist der entsprechende deutschsprachige Begriff der "erweiterten Realität" bzw. "gemischten Realität". Dabei wird die reale Umgebung mit virtuellen Elementen angereichert. Das hat mehrere Vorteile: Der Blick nach unten, auf andere Displays als der Windschutzscheibe, entfällt, da viele relevante Informationen beim Blick durch die Windschutzscheibe erscheinen. So muss der Fahrer seinen Blick nicht von der Fahrbahn abwenden. Außerdem ist durch die positionsgenaue Verortung der virtuellen Elemente in der realen Umwelt ein geringerer kognitiver Aufwand seitens des Fahrers wahrscheinlich, da keine Interpretation einer Grafik auf einem gesonderten Display erfolgen muss. Hinsichtlich des automatischen Fahrens kann ebenfalls ein Mehrwert erzeugt werden. Diesbezüglich wird auf den Artikel "3D-FRC: Depiction of the future road course in the Head-Up-Display" von C.A. Wiesner, M. Ruf D. Sirim und G. Klinker in 2017 IEEE International Symposium on Mixed and Augmented Reality hingewiesen, in dem diese Vorteile genauer erläutert werden.

Da die technologischen Mittel heutzutage entsprechend begrenzt sind, kann davon ausgegangen werden, dass mittelfristig keine voll bespielbaren Windschutzscheiben in Fahrzeugen anzutreffen sein werden. Zurzeit werden Head-Up Displays in den Fahrzeugen eingesetzt. Diese haben auch den Vorteil, dass das Bild des HUD näher an der realen Umwelt erscheint. Bei diesen Displays handelt es sich eigentlich um Projektionseinheiten, die ein Bild auf die Windschutzscheibe projizieren. Dieses Bild befindet sich jedoch aus der Sicht des Fahrers je nach Bauart des Moduls wenige Meter bis 15 Meter vor dem Fahrzeug.

Ein großer Vorteil der bisher bekannten "Augmented Reality"-Anzeigen (AR-Anzeigen) besteht darin, die entsprechenden Anzeigen direkt innerhalb bzw. als Teil der Umwelt darzustellen. Relativ naheliegende Beispiele beziehen sich meist auf den Bereich der Navigation. Während klassische Navigationsanzeigen (in herkömmlichen HUD) in der Regel schematische Darstellungen anzeigen (z.B. einen rechtwinklig verlaufenden Pfeil nach rechts als Zeichen dafür, dass bei nächster Gelegenheit rechts abgebogen werden soll, bieten AR-Anzeigen wesentlich effektivere Möglichkeiten. Da die Anzeigen als "Teil der Umwelt" dargestellt werden können, sind äußerst schnelle und intuitive Interpretationen für den Nutzer möglich.

Solche Head-Up Displays haben noch den Nachteil, dass bei ihnen die HUD Einblendungen nur in einem Ausschnitt des realen Sichtfeldes, der durch die Eyebox des HUD's bestimmt wird, des Fahrers möglich sind. Ein Problem besteht auch darin, dass wenn der Fahrer den Kopf dreht oder neigt, der Ausschnitt, in dem die HUD-Einblendungen sichtbar sind, sich aus dem zentralen Blickbereich des Fahrers herausbewegt, so dass es für den Fahrer schwieriger wird, die eingeblendeten Informationen zu erfassen.

Zur Lösung dieser Probleme gibt es den Ansatz, auch die Kopfbewegungen des Fahrers zu erfassen und in Abhängigkeit davon die HUD-Einblendungen zu positionieren. Ein anderer Ansatz besteht in der Verwendung von Datenbrillen für Fahrerassistenzsysteme. Bei diesen kann das gesamte Sichtfeld des Fahrers mit virtuellen Einblendungen bespielt werden. Auch bei den Datenbrillen ist es erforderlich, die Kopfbewegungen und ggfs. auch die Augenbewegungen zu erfassen, um die AR-Einblendungen lagerichtig zur Umwelt zu positionieren.

Aus der DE 10 2013 016 247 A1 ist ein Verfahren zur augmentierten Darstellung mindestens einer virtuellen Zusatzinformation in einem aufgenommenen digitalen Bild einer Fahrzeugumgebung bekannt, wobei das aufgenommene Bild als Hintergrundbild auf einer Anzeige ausgegeben wird. Es wird eine Zusatzinformation im Ausgabebild an einer Zielposition ausgegeben, insbesondere fest positioniert/verankert. Dabei wird mittels eines ersten, insbesondere groben Positionierungsverfahrens eine Vorposition der Zusatzinformation ermittelt und mittels eines zweiten, insbesondere feinen Positionierungsverfahrens die Vorposition angepasst.

In der DE 10 2014 208 973 A1 wird vorgeschlagen, bei einem HUD auch eine Bewegungsverfolgung des Benutzers (Benutzertracking) durchzuführen. Dies kann über Sensoren geschehen, welche von dem Fahrzeug umfasst sind. Die Daten über eine Bewegung des Benutzers können zu einer korrekten Anpassung einer Darstellung eines AR-Objektes genutzt werden. Damit kann auch die Gesamtlatenz verbessert werden, so dass sich das virtuelle Objekt 130 aus der Sicht eines Fahrers oder Mitfahrers plausibel in die Umgebung einfügen kann.

Aus der DE 10 2015 007 518 A1 ist ein Verfahren zur Vorhersage der Lage eines Fahrzeugs bekannt. Dabei werden verschiedene Sensortypen eingesetzt. Der erste Sensortyp, dient zur Erfassung der Lage des Fahrzeugs erfassen. Die Sensoren des zweiten Typs erfassen die Auslenkung des Fahrzeugaufbaus aus der Mittenlage. Die Sensoren des dritten Sensortyps 26 sind derart ausgebildet, dass eine Umgebung des Fahrzeugs erfasst werden kann, insbesondere wird ein Profil der Fahrbahnoberfläche vor dem Fahrzeug gemessen. Aufgrund der durch die Sensoren des ersten Sensortyps bekannten Geschwindigkeit des Fahrzeugs kann ermittelt werden, wann sich eine Bodenunebenheit direkt unter dem Fahrzeug befindet, so dass diese Information von einer Vorhersageeinrichtung 12 vorteilhaft zur latenzfreien Bestimmung der Lage 30 verwendet werden kann. Sensoren des dritten Sensortyps 26 sind beispielsweise Stereokameras, Ultraschallsensoren, LIDAR-Systeme und/oder Lasertriangulationssensoren.

Aus der DE 10 2015 208 738 A1 ist ein Head-up-Display für ein Fahrzeug bekannt. Eine Besonderheit besteht darin, dass das Head-up-Display so ausgestaltet ist, eine Relativbewegung zwischen dem Kopf des Fahrers und dem Head-up-Display auszugleichen, um dadurch eine Relativbewegung zwischen dem virtuellen Bild und dem Kopf des Fahrers zu verringern.

Aus der DE 10 2017 001 015 A1 ist ein Head-up-Display mit latenzarmer Korrektur eines projizierten Bildes bekannt. Dazu wird der Fahrer mit einer Kamera ausgestattet, die an einer Halterung am Kopf des Fahrers angebracht wird. Im Fahrzeuginnenraum ist eine Kamera angebracht, die den Fahrer beobachtet. Um die Korrektur zu berechnen, wird die Time Warp-Technik eingesetzt, die aus dem Bereich von Virtual Reality-Anzeigen bekannt ist.

Aus der DE 10 2015 109 027 A1 ist eine Head-Up Displayeinheit für ein Fahrzeug zur Erzeugung eines virtuellen Bildes im Sichtfeld des Fahrers auf die Fahrzeugumgebung bekannt. Die Displayeinheit umfasst eine Emissionseinheit zur Erzeugung und Abstrahlung eines Bildsignals, das auf einem mehrfach gefalteten Projektionspfad in den Sichtbereich des Fahrers projiziert wird. Der Fahrer nimmt das projizierte Bildsignal als das virtuelle Bild wahr. Die Displayeinheit umfasst einen beweglichen Reflektor, der einen Teil des Projektionspfads beeinflusst. Die Darstellung des virtuellen Bilds wird durch eine gesteuerte Änderung der Orientierung des beweglichen Reflektors beeinflusst sowie zusätzlich durch eine Modifizierung des abgestrahlten Bildsignals gegenüber einem Bildsignal im Rohzustand, unter anderem zur Kompensation einer Fahrzeug-Bewegung.

Aus der WO 2019/057496 A1 ist ein Verfahren zum Betreiben eines Head-Up-Displays bekannt. Bei dem Verfahren wir der auf dem Head-Up-Display darzustellende Bildinhalt generiert und entsprechend optischer Randbedingungen des Head-Up-Displays vorverzerrt. Aus dem vorverzerrten Bildsignal wird ein Anzeigesignal generiert. Zudem wird eine schnelle Positionsveränderung des Durchstoßpunktes der Blickrichtung eines Nutzers mit einer Fläche einer Spiegeleinheit des Head- Up-Displays detektiert und der Bildinhalt, das vorverzerrte Bildsignal oder das Anzeigesignal mit einem entsprechenden Offset beaufschlagt. Das direkt oder indirekt mit dem Offset beaufschlagte Anzeigesignal wird schließlich dargestellt.

Bei der Verwendung von HUDs wie auch bei Datenbrillen ist es wichtig, dass die Anzeigegeschwindigkeit hoch und die Latenz zwischen einer vom System erkannten Bewegung bis zur Anpassung der Darstellung auf dem Display gering ist. Wenn dies nicht gegeben ist, kann es zu Problemen wie Reisekrankheit (Motion Sickness) und Fehlausrichtungen zwischen physischer und virtueller Welt führen. Auch die Fahrbahnbeschaffenheit spielt eine Rolle, weil sie zu Erschütterungen führen kann, die die Genauigkeit der AR-Einblendung ebenfalls beeinträchtigen können.

Weitere Herausforderungen sind aus verschiedenen Gründen gegeben:
Aus dem Bereich der Virtual und Augmented Reality-Technologie ist bekannt, dass für einen Betrachter ein latenzfreies Benutzungserlebnis dann entsteht, wenn die ihm gezeigten Bilder mit einer Rate von min. 90 Hz (≈11 ms pro Bild) und einer Systemlatenz kleiner als 20 ms generiert werden. Untersuchungen haben gezeigt, dass diese Anforderungen auf Augmented Reality Anzeigen in Head-Up Displays zu übertragen sind.

Durch den komplexen Aufbau dieser Systeme mit den verschiedenen Sensoren und deren Kopplung mit verschiedenen Recheneinheiten zur Verarbeitung der Sensordaten, der Notwendigkeit der Modellierung von Fahrzeugbewegungen, der Notwendigkeit der Prädiktion von Bildinhalten wegen der Fahrzeugbewegungen und der Bewegung während der Generierung der Anzeigen, etc., ist die Latenz des Gesamtsystems jedoch deutlich größer als 20 ms.

Die bekannten Lösungen sind mit verschiedenen Nachteilen behaftet. Dies wurde im Rahmen der Erfindung erkannt. Bei den heute bekannten HUDs besteht noch der Bedarf für weitere Verbesserungen bei den HUD-Einblendungen unter Berücksichtigung der Fahrzeugbewegungen und der Kopfbewegungen des Fahrers.

Durch die lange Systemkette dauert es einige Zeit (-150 bis 250ms), bis das für den Fahrer relevante Bild angezeigt wird. Dadurch entsteht eine Latenz, die sich im "Schwimmen" / "Zittern" des virtuellen Bildes äußert. Dabei bedeutet Latenz im Zusammenhang mit HUD-Einblendungen den zeitlichen Versatz zwischen angezeigtem Bild im HUD und der menschlichen Wahrnehmung der Umwelt.

Für die Anzeige des Bildes in korrekter Lage auf der Straße aus Sicht des Anwenders ist viel Rechenaufwand notwendig. Dies gilt für die gesamte Systemkette von Positionsbestimmung bis zur Anzeige des gerenderten des Bildes auf dem HUD-Bildschirm. Andererseits besteht das Problem, dass allein durch schnelle Rechner/Steuergeräte auch keine latenzfreie AR-Anzeige möglich ist.

Aus der DE 10 2012 214 903 A1 ist ein Verfahren zum Betreiben eines Head-up-Displays für ein Fahrzeug bekannt. Abhängig von einem vorgegebenen dreidimensionalen Fahrzeugumfeldmodell und abhängig von einem aktuell erfassten zweiten Bild der Bildfolge wird ein korrigiertes Anzeigebild ermittelt. Das Fahrzeugumfeldmodell ist hierbei abhängig von zumindest einem ersten Bild einer Bildfolge ermittelt und umfasst ein in dem ersten Bild detektiertes Objekt, das eine vorgegebene resultierende absolute Position oder eine vorgegebene resultierende Position in Bezug auf das Fahrzeug aufweist. Das zweite Bild ist eine vorgegebene Zeitdauer nach dem ersten Bild erfasst und umfasst das detektierte Objekt. Das korrigierte Anzeigebild umfasst zumindest ein grafisches Element, das das detektierte Objekt repräsentiert und wird derart ermittelt, dass es geeignet ist, auf ein vorgegebenes Anzeigefeld des Head-up-Displays projiziert zu werden, so dass das zumindest eine grafische Element von einem Betrachter des Anzeigefelds aus einer vorgegebenen Betrachtungsposition heraus mit einem direkten Bezug zu der realen Umgebung des Fahrzeugs wahrgenommen wird.

Die DE 10 2016 009333 A1 offenbart ein Fahrzeug mit einem Bildprojektor, der als HUD einem Fahrer des Fahrzeugs visuelle Informationen einspielt, sowie ein Verfahren zum Ansteuern des Bildprojektors durch einen Grafikprozessor. Auf Basis von Bildinformation wird durch den Grafikprozessor für jede der Farbkomponenten Rot, Grün und Blau ein jeweiliges Farbkomponentenbild erzeugt. In einem weiteren Schritt findet durch eine kinematische Messvorrichtung eine Schätzung einer Relativbewegung des Bildprojektors gegenüber einer Umgebung des Bildprojektors statt. Auf Basis dieser geschätzten Relativbewegung wird durch den Grafikprozessor eine Ausgleichsfunktion zum Ausgleichen der Relativbewegung für das Farbkomponentenbild ermittelt. Hierbei wird das Farbkomponentenbild derart modifiziert, dass ein eingeblendetes Objekt so dargestellt wird, als wäre es ortsfest mit der echten Umgebung um den Bildprojektor verbunden. Da das Rendern eines eigenen Farbkomponentenbildes hohe Leistungsanforderungen an den Grafikprozessor stellt und gewisse Latenzen einbringt, wird das Verfahren mit "Asynchronous Time Warping" kombiniert. Dabei wird die Drehkomponente der Bewegung durch Verschieben und Drehen eines bereits gerenderten Bildes kompensiert.

Die Erfindung setzt sich zur Aufgabe, einen Ansatz zu finden, mit dem die vorgenannten Probleme verbessert werden können. Diese Aufgabe wird durch ein Verfahren zur Erzeugung einer lagerichtigen Einblendung einer Zusatzinformation auf einer Anzeigeeinheit für ein Fahrzeug gemäß Anspruch 1, eine Vorrichtung zur Durchführung des Verfahrens gemäß Anspruch 8 sowie ein Fahrzeug gemäß Anspruch 14 gelöst.

Die abhängigen Ansprüche beinhalten vorteilhafte Weiterbildungen und Verbesserungen der Erfindung entsprechend der nachfolgenden Beschreibung dieser Maßnahmen.

Die Lösung beruht auf einer geschickten Strategie zur Synchronisierung von mehreren Abläufen. Einmal der Erfassung der Sensordaten, zum anderen der Voraussage von Fahrzeugzuständen bezüglich Position und Orientierung des Fahrzeuges, und weiter der Generierung und Ausgabe der AR-Anzeigen auf dem Display. Das Gesamtsystem lässt sich daher in die drei Komponenten Sensorik, Applikation und Display aufteilen.

Die Lösung ist insbesondere für HUD-Anzeigeeinheiten interessant. Sie könnte aber auch für HMD-Anzeigeeinheiten (Head-Mounted Displays), insbesondere Datenbrillen eingesetzt werden.

In einer bevorzugten Variante besteht die Lösung in einem Verfahren zur Erzeugung einer lagerichtigen Einblendung einer Zusatzinformation auf einer Anzeigeeinheit für ein Fahrzeug, wobei das Fahrzeug mit einer Anzahl von Sensoren zur Erfassung der Umgebung und der Position und Orientierung des Fahrzeuges ausgestattet ist. Dabei werden die Daten der Sensoren periodisch verarbeitet. Das Verfahren zeichnet sich dadurch aus, dass eine Vorausberechnung der Position und Orientierung des Fahrzeuges erfolgt, in der ein Rechenmodell benutzt wird, bei dem die Zeitpunkte für die Erfassung der Sensordaten sowie die Systemlaufzeiten für die Verarbeitung der Sensordaten Berücksichtigung finden. Die vorausberechnete Position und Orientierung wird an einen Rendering-Prozess für die Berechnung des anzuzeigenden Bildes übergeben. Dabei wird wenigstens die Lage der Einblendung der Zusatzinformation im Anzeigebild in Abhängigkeit von der Vorausberechnung der Position und Orientierung des Fahrzeuges in dem Rendering-Prozess berechnet. Anschließend wird eine Nachbearbeitung des in dem Rendering-Prozess fertig gerenderten Bildes durchgeführt. Dabei erfolgt eine Transformation des Bildinhaltes mit einer Time Warp Operation, wobei die Transformationsrechnung durch die aktualisierte Position und Orientierung des Fahrzeuges bestimmt wird. Die Aktualisierung der Position und Orientierung des Fahrzeuges läuft auch während des Rendering-Prozesses weiter, so dass am Ende des Rendering-Prozesses bereits eine nochmalige Erfassung der Position und Orientierung des Fahrzeuges erfolgte. Durch die Vorausberechnung der Position und Orientierung des Fahrzeuges und die Nachbearbeitung mit aktualisierter Position und Orientierung kann die Gesamtlatenz des Anzeigesystems verbessert werden. So kann ein "Schwimmen" oder "Zittern" des Bildes mit den Zusatzinformationen vermieden werden. Es ist möglich ein ruhiges Bild einzublenden, dass für den Insassen des Fahrzeuges lagerichtig in der Umwelt des Fahrzeuges verortet ist. Damit werden auch Fehlinterpretationen der Zusatzinformationen und Verwirrungen des Fahrers vermieden.

Erfindungsgemäß wird für die Vorausberechnung des Zustandes des Fahrzeuges ein Rechenmodell benutzt, bei dem die Zeitpunkte für die Erfassung der Sensordaten sowie die Systemlaufzeiten für die Verarbeitung der Sensordaten berücksichtigt werden. Die minimale Updaterate der Applikation (incl. des Renderings) richtet sich nach der Bildwiederholrate des Displays - sie gibt jedoch das Timing für alle anderen Komponenten im System vor. Durch den internen Applikationsablauf ist genau festgelegt, zu welchem Zeitpunkt die Daten der verschiedenen Sensoren zur Weiterverarbeitung benötigt werden. Da die Laufzeiten der einzelnen Datenströme bekannt sind, kann durch die besondere "Just-In-Time Lieferung" der Sensordaten sichergestellt werden, dass die Applikation immer mit den aktuellsten Daten arbeitet und keine zusätzliche Latenz entsteht.

Es ist besonders vorteilhaft, wenn die Vorausberechnung der Position und Orientierung des Fahrzeuges für den Zeitpunkt der Anzeige der Einblendung der Zusatzinformation auf der Anzeigeeinheit prädiziert wird. Zu diesem Zeitpunkt wird der Insasse die Einblendung betrachten und dann sollte die Einblendung lagerichtig erfolgen.

Dafür kann es weiterhin vorteilhaft sein, wenn eine Blickrichtung eines Insassen des Fahrzeuges durch wenigstens einen Sensor erfasst wird, und die Blickrichtung des Insassen des Fahrzeuges bei dem Rendering-Prozess für die Berechnung des anzuzeigenden Bildes berücksichtigt wird, wobei eine Prädiktion der Blickrichtung des Fahrers erfolgt, wobei der Zeitpunkt, für den die Blickrichtung des Fahrers prädiziert wird, dem Zeitpunkt der Anzeige der Einblendung der Zusatzinformationen durch die Anzeigeeinheit entspricht. Bei Head-up Displays ist es wichtig, die Blickrichtung zu kennen, weil die Zusatzinformationen nicht über das ganze Sichtfeld lagerichtig eingeblendet werden können.

Eine weitere vorteilhafte Maßnahme besteht darin, für die Berechnung der Bilder zur Erzeugung der Einblendung der Zusatzinformationen ein Front Buffer Rendering-Prozess einzusetzen, bei dem das Bild direkt in den Videospeicher der Anzeigeeinheit gerendert wird. Dies trägt erheblich zur Latenzverringerung bei.

Zusätzlich kann für die Erzeugung der Einblendung der Zusatzinformationen wenigstens die Anzeigeeinheit in einem "Low Persistence"-Anzeigemode betrieben werden.

Dies kann in einer bevorzugten Variante mit einem LCD-Display realisiert werden, dessen Hintergrundbeleuchtung während des Schreibens von Daten in den Videospeicher ausgeschaltet wird, und während einer kurzen Anzeigeperiode eingeschaltet wird, oder mit einem OLED-Display, dessen Leuchtphase so gesteuert wird, dass sie nur während einer kurzen Anzeigeperiode zum Leuchten gebracht wird.

In einem konkreten Beispiels arbeitet das Display mit einer Bildwiederholrate von min. 90 Hz (ca. 11 ms pro Bild) und wird von der Applikation "getriggert", die den Takt vorgibt. Weiterhin wird das Display im "low-persistence" Modus betrieben, in dem das Display nur für 2 ms (von insgesamt 11 ms bei 90 Hz in diesem Beispiel) beleuchtet wird. Dadurch kann das Erscheinen von Bewegungsunschärfe reduziert werden und die "Dunkel-Tastung" des Displays für den Bildaufbau verwendet werden. Dies entspricht der Technik des "Front Buffer Rendering" durch die Applikation. So kann die Latenz (im Vergleich zu herkömmlichen Systemen) um einen ganzen Frame (hier 11 ms) reduziert werden.

Durch die geschickte Aneinanderreihung der einzelnen Applikationszyklen unter Kenntnis der Laufzeiten der am System beteiligten Komponenten, die modellbasierte Voraussage von Position und Orientierung des Fahrzeuges in Kombination mit einer schnellen Sensorik, kann die Latenz des Gesamtsystems auf wenige Millisekunden reduziert werden. Dies verbessert sehr die Akzeptanz solcher AR-Anzeigen bei HUDs.

Zur Bestimmung der Blickrichtung des Insassen des Fahrzeuges ist es vorteilhaft, wenn die Blickrichtung mit einer Anzahl von im Fahrzeug installierten IR-Kameras erfasst wird, die die Position von einer Anzahl von Leuchtflecken ermitteln, die durch entsprechende Lichtquellen, die an einer Halterung am Kopf des Insassen angebracht sind, erzeugt werden. So sind die Daten schnell in der Recheneinrichtung des Fahrzeuges verfügbar, die die Prädiktion der Blickrichtung vornimmt.

Die verschiedenen Typen von Sensoren arbeiten alle mit ihrem eigenen Takt. Sie sind aber immer dann zeitlich miteinander synchronisiert, wenn sie redundante Informationen liefern und auf Applikationsebene fusioniert werden. So können mehrere Sensoren/Datenquellen zur Beschreibung der Fahrbahnoberfläche, Fahrzeugposition, usw. verwendet werden, um z.B. die Genauigkeit und/oder Frequenz zu erhöhen. Diese zeitliche Synchronisierung kann z.B. durch einen gemeinsamen Taktgeber, wie durch die Applikation selbst oder extern, erfolgen.

Durch den Mechanismus eines applikationsinternen Taktgebers kann das Gesamtsystem adaptiv umgesetzt werden. Das bedeutet, dass die Zeit zwischen der Anforderung eines Datenstroms durch die Applikation und der Lieferung durch den Sensor / das Modell, sowie die Laufzeit des Gesamtsystems, applikationsintern gemessen und darauf reagiert werden kann. Das System stellt sich also selbst (zur Laufzeit) auf die entsprechenden Gegebenheiten und sich selbst ein.

Für eine Vorrichtung zur Durchführung des Verfahrens die wenigstens eine Anzeigeeinheit aufweist mit der Zusatzinformationen in das Sichtfeld des Insassen eines Fahrzeuges eingeblendet werden können, ist es vorteilhaft, wenn sie mit einer Anzahl von Sensoren zur Erfassung der Umgebung und der Position und Orientierung eines Fahrzeuges und mit einer Recheneinrichtung ausgestattet ist, mit der die Daten der Sensoren periodisch verarbeitet werden. Im Besonderen wird die Recheneinrichtung so ausgelegt, dass sie eine Vorausberechnung der Position und Orientierung des Fahrzeuges durchführt, in der ein Rechenmodell benutzt wird, bei dem die Zeitpunkte für die Erfassung der Sensordaten sowie die Systemlaufzeiten für die Verarbeitung der Sensordaten Berücksichtigung finden, und weiterhin für die Durchführung eines Rendering-Prozesses. Dabei ist der Rendering-Prozess so ausgelegt, dass darin die vorausberechnete Position und Orientierung des Fahrzeuges für die Berechnung des anzuzeigenden Bildes berücksichtigt wird, wobei die Recheneinrichtung für eine nochmalige Erfassung der Position und Orientierung des Fahrzeuges ausgelegt ist und wobei die Recheneinrichtung weiterhin für eine Nachbearbeitung des fertig gerenderten Bildes ausgelegt ist, bei der der Bildinhalt mit einer Time Warp Operation transformiert wird, wobei die Transformationsrechnung durch die aktualisierte Position und Orientierung des Fahrzeuges bestimmt wird.

Weitere entsprechende vorteilhafte Maßnahmen für die Vorrichtung ergeben sich aus den abhängigen Ansprüchen. Typischerweise wird als Anzeigeeinheit ein Head-Up-Display eingesetzt.

Die Erfindung kann bevorzugt in einem Fahrzeug eingesetzt werden.

Ausführungsbeispiele der Erfindung sind in den Zeichnungen dargestellt und werden nachfolgend anhand der Figuren näher erläutert.

Es zeigen:
- Fig. 1: eine Darstellung des Cockpits des Fahrzeuges mit einer HUD-Anzeigeeinheit;
- Fig. 2: eine Darstellung des Cockpits des Fahrzeuges mit IR-Kameras, die für das Outside-In Tracking zur Erfassung der Kopfposen eingesetzt werden;
- Fig. 3: ein Blockschaltbild des Infotainment-Systems des Fahrzeuges;
- Fig. 4: einen Systemvorschlag für die verschiedenen periodisch ablaufenden Vorgänge die für die Berechnung und Ausgabe von AR-Inhalten zusammenspielen; und
- Fig. 5: den zeitlichen Ablauf der verschiedenen periodisch ablaufenden Vorgänge.

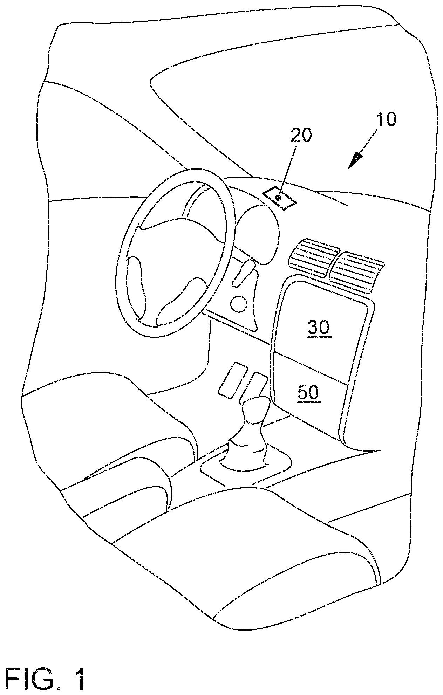

Fig. 1 zeigt das typische Cockpit eines Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Campingfahrzeuge, Landmaschinen, Baumaschinen, Schienenfahrzeuge usw. Der Einsatz der Erfindung wäre allgemein bei Landfahrzeugen, inklusive Robotern, Schienenfahrzeugen, Wasserfahrzeugen und Luftfahrzeugen inklusive Flugzeugen und Drohnen möglich.

In dem Cockpit sind drei Anzeigeeinheiten eines Infotainment-Systems dargestellt. Es handelt sich um einen berührungsempfindlichen Bildschirm 30, der in der Mittelkonsole angebracht ist, ein Kombiinstrument 110, welches im Armaturenbrett angebracht ist und ein Head-up-Display 20, das hinter dem Kombiinstrument 110 unterhalb der Windschutzscheibe angebracht ist. Bei der Fahrt liegt die Mittelkonsole nicht im Sichtfeld des Fahrers. Deshalb werden die Zusatzinformationen während der Fahrt über das HUD eingeblendet.

Der berührungsempfindliche Bildschirm 30 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainment-Systems wird hauptsächlich der berührungsempfindliche Bildschirm 30 ("Touchscreen") benutzt, wobei dieser Bildschirm 30 insbesondere von einem Fahrer des Fahrzeugs 10, aber auch von einem Beifahrer des Fahrzeugs 10 gut eingesehen und bedient werden kann. Unterhalb des Bildschirms 30 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainmentsystems möglich. Diese Einheit ist nicht separat dargestellt, sondern wird als Teil der Eingabeeinheit 50 betrachtet.

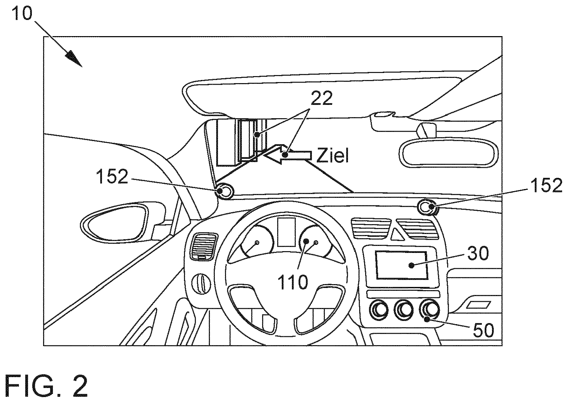

In Fig. 2 ist das Cockpit aus anderer Perspektive gezeichnet. Mit der Bezugszahl 152 sind IR-Detektoren bezeichnet, die bei dem Armaturenbrett angebracht sind. Diese Detektoren sind Teil des Outside-In Tracking Systems, mit dem der Fahrer oder der Beifahrer beobachtet wird. Ziel ist es die genaue Kopfpose des Fahrers oder Beifahrers zu erfassen. Das geschieht dadurch, dass mit den IR-Detektoren 152 die Intensität der IR-Strahlung gemessen wird, die von den Infrarot-Lichtquellen abgestrahlt wird, die an einer Brille des Fahrers angebracht sind. Bei jeder Kopfdrehung wird eine andere Intensität der IR-Strahlung gemessen. Aus den gemessenen Intensitätswerten kann auf die Kopfpose zurückgeschlossen werden. Als IR-Detektoren können IR-Kameras eingesetzt werden. Es ist auch eine Ausführung denkbar, bei der die Kopfpose des Fahrers mit einer Innenraumkamera erfasst wird. Hier ist es nicht erforderlich, den Fahrer mit Brille auszustatten. Dazu ist dann aber eine aufwendigere Bildverarbeitung erforderlich. Ebenfalls gezeigt ist in Fig. 2 eine AR-Einblendung, die von dem HUD 20 ausgegeben wird. Es handelt sich um einen Zielpfeil 22 und einen Rahmen, der den Zielpunkt der Navigationsroute markiert. Das Fahrzeug 10 hat also fast das Ziel erreicht und soll an dem Punkt auf den der Zielpfeil 22 hinweist halten. Die AR-Einblendung wurde so berechnet, dass sie lagerichtig in der Umwelt verortet ist.

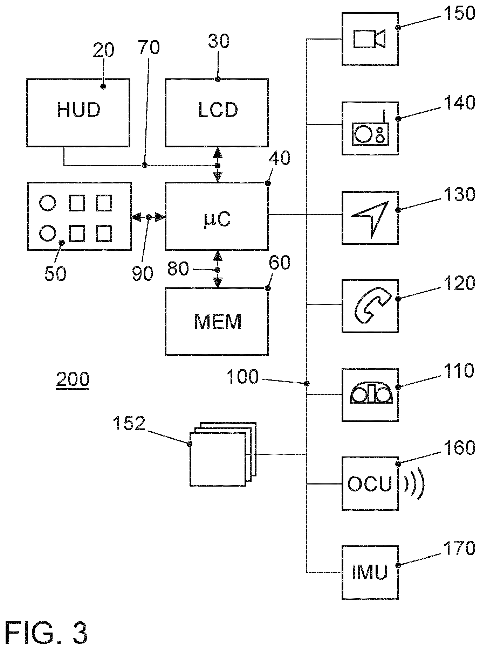

Fig. 3 zeigt schematisch ein Blockschaltbild des Infotainment-Systems 200 sowie beispielhaft einige Teilsysteme oder Applikationen des Infotainment-Systems. Es sind die beiden Anzeigeeinheiten berührungsempfindliche Anzeigeeinheit 30 und HUD 20, eine Recheneinrichtung 40, eine Bedieneinheit 50 und einen Speicher 60 gezeigt. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheiten 20 und 30 sind über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Ebenfalls werden die fertig gerenderten Anzeigebilder für das HUD 20 über die Datenleitung 70 übertragen. Zu der Bedieneinheit 50 gehören die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw. Die Speichereinrichtung 60 ist über eine Datenleitung 80 mit der Recheneinrichtung 40 verbunden.

Die weiteren Teile des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). An den Datenbus 100 ist auch eine Fahrzeug-Messeinheit 170 angeschlossen. Diese Fahrzeug-Messeinheit 170 dient der Erfassung der Bewegung des Fahrzeuges, insbesondere der Erfassung der Beschleunigungen des Fahrzeuges. Sie kann als konventionelle IMU-Einheit, entsprechend Inertial Measurement Unit, ausgebildet sein. In einer IMU-Unit finden sich typischerweise Beschleunigungssensoren und Drehratensensoren wie ein Laser-Gyroskop, oder ein Magnetometer-Gyroskop. Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbildern/s entspricht. Alternativ kann eine Spezialkamera eingesetzt werden, die mehr Bilder/s aufnimmt, um die Genauigkeit der Objekterkennung bei sich schneller bewegenden Objekten zu erhöhen oder die Licht in einem anderen als dem sichtbaren Spektrum aufnimmt. Es können mehrere Kameras zur Umfeldbeobachtung eingesetzt werden. Daneben könnten auch RADAR- oder LIDAR-Systeme ergänzend oder alternativ eingesetzt werden, um die Umfeldbeobachtung durchzuführen oder zu erweitern. Ebenfalls können Sensoren der Odometrie eingesetzt werden, um z.B. die Genauigkeit der Positionsbestimmung für das Fahrzeug zu verbessern. Beispiele derartiger Sensoren sind Raddrehzahlsensoren Magnetometer, und Beschleunigungssensoren. Für die drahtlose Kommunikation nach innen und außen ist das Fahrzeug 10 mit einem Kommunikationsmodul 160 ausgestattet. Dieses Modul wird oft auch als On-Board Connectivity Unit OCU bezeichnet. Es kann für die Mobilfunk-Kommunikation, z.B. nach LTE Standard, entsprechend Long Term Evolution, oder 5G Standard ausgelegt sein. Ebenfalls kann es für WLAN-Kommunikation, entsprechend Wireless LAN, und Bluetooth-Kommunikation ausgelegt sein, sei es für die Kommunikation zu Geräten der Insassen im Fahrzeug oder für die Fahrzeug-zu-Fahrzeug Kommunikation etc. Mit der Bezugszahl 152 sind die IR-Detektoren bezeichnet, die im Bereich des Armaturenbretts angebracht sind. Sie können als IR-Kameras ausgebildet sein. Die Kameras erzeugen ein Bild, das keine sehr große Auflösung haben muss. Eine Auflösung von 382 x 288 Pixel ist vollkommen ausreichend für diesen Anwendungszweck. Auch die Bildauswertung kann bereits in der Kamera stattfinden. Es werden dabei die Koordinaten der verschiedenen Leuchtflecken bestimmt, die die IR-Kamera aufnimmt. Dies wird jetzt im Zusammenhang mit der der Datenbrille beschrieben.

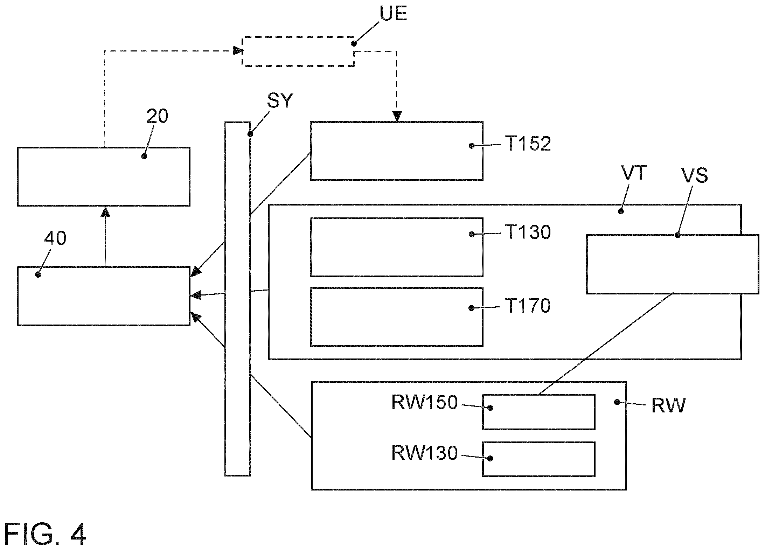

Fig. 4 zeigt einen Systemvorschlag für die verschiedenen periodisch ablaufenden Vorgänge, die für die Berechnung und Ausgabe von AR-Inhalten zusammenspielen. Darin bezeichnen gleiche Bezugszahlen die gleichen Komponenten wie in den vorhergehenden Figuren. Der Ablauf der verschiedenen Verfahrensschritte ist durch die Pfeilrichtungen vorgegeben und erfolgt im Uhrzeigersinn. Ganz oben mit Bezugszeichen UE sind die Augen des Fahrzeuginsassen, typischerweise des Fahrers bezeichnet. Die Position der Augen, also die Blickrichtung, wird durch die erwähnten IR-Detektoren 152 erfasst. Dafür ist eine Bildauswertung der von den IR-Detektoren 152 aufgenommenen Bilder erforderlich. Dies wurde bereits zuvor beschrieben. Den IR-Detektoren 152 kann zu diesem Zweck eine eigene Recheneinrichtung zugeordnet sein. In erster Näherung kann die Blickrichtung mit der Kopfpose gleich gesetzt werden. Bei Einsatz einer Videokamera zur Fahrerbeobachtung kann durch genauere Bildauswertung der Augenpartie eine noch genauere Bestimmung der Blickrichtung durch Auswertung der Augenposition erfolgen. In dem mit T152 bezeichneten Block erfolgt das periodische Head Tracking und ggfs. das Eye Tracking zur Erfassung der Blickrichtung des Fahrers. Die Bilderfassung kann mit einer Frequenz von 25 Hz bzw. 30 Hz erfolgen. Dies ist für die Verringerung der Gesamtlatenz nicht ausreichend. Deshalb erfolgt eine Interpolation um Zwischenwerte zu berechnen. Dies kann in ähnlicher Weise wie bei der Hololens erfolgen, bei der eine Steigerung auf 240 Hz für die Kopfpose erfolgt.

Mit dem Bezugszeichen VT ist ein Block bezeichnet, in dem das Tracking von der Fahrzeugposition und -orientierung erfolgt. Dies geschieht durch Auswertung der Daten in dem Block T130, die von dem Navigationssystem 130 und der Odometrie des Fahrzeuges 10 geliefert werden. Die Erfassung der Fahrzeugposition kann präzise erfolgen, ist aber langsam. Die Erfassung der Rotation in dem Block T170 mit Hilfe der IMU-Messeinheit 170 kann schnell erfolgen, ist aber driftbehaftet. Der Block VS markiert die aktuellen Fahrzeugwerte und zustände, die auch für die Erfassung des Fahrzeugumfeldes interessant sind. Deshalb werden diese auch dem Block RW, in dem die Erfassung des Umfeldes des Fahrzeuges 10 durchgeführt wird, zur Verfügung gestellt. Der Block RW beinhaltet zum Einen den Block RW150, mit dem die dynamische Umfelderfassung mit Sensoren (Videokamera 150, RADAR, LIDAR, etc.) geschieht. Der Block RW beinhaltet zum Anderen den Block RW130, mit dem die statische Umfelderfassung mit Hilfe der Auswertung von Kartenmaterial geschieht. Auch die Verarbeitung in den Blöcken VT und RW geschieht periodisch mit eigenen Frequenzen, z.B. 50 Hz für die Erfassung der Fahrzeugposition und 90 Hz für die Erfassung der Fahrzeugrotation. Die Umfelderfassung kann z.B. mit einer Frequenz von 25 Hz oder 30 Hz erfolgen.

Alle Informationen, die von den Tracking-Blöcken T152, VT und RW berechnet werden, werden an die Recheneinrichtung 40 weitergeleitet. Die Sensoren arbeiten alle mit ihrem eigenen Taktzyklus. Sie werden aber immer dann zeitlich miteinander synchronisiert, wenn sie redundante Informationen liefern und auf Applikationsebene fusioniert werden. So können mehrere Sensoren/Datenquellen zur Beschreibung der Fahrbahnoberfläche, Fahrzeugposition, usw. verwendet werden, um z.B. die Genauigkeit und/oder Frequenz zu erhöhen. Diese zeitliche Synchronisierung kann z.B. durch einen gemeinsamen Taktgeber, wie durch die Applikation selbst oder extern, erfolgen. In der Fig. 4 ist zu diesem Zweck der Block SY vorgesehen. In diesem Block findet die Angleichung der von den verschiedenen Sensoren gelieferten Daten statt. Der Block arbeitet wie folgt:
Er misst die Zykluszeiten, für die von den Sensoren gelieferten Ergebnisse. Er bezieht alle Zykluszeiten auf einen gemeinsamen Takt, der von der Applikation, die in der Recheneinheit 40 abgearbeitet wird vorgegeben wird. Er wird dann die Sensor-Daten zeitrichtig, an den entsprechenden Verarbeitungsteil von der Applikation weitergeben. Wenn das aufgrund der Zykluszeit nicht möglich ist, findet eine Prädiktion der Sensor-Daten statt, die für den Zeitpunkt vorausberechnet wird, zu dem diese Daten von der Applikation verarbeitet werden sollen. Dafür müssen Sensorwerte aus vergangenen Zyklen abgespeichert werden, die für die Prädiktion als Grundlage benutzt werden, um Zwischenwerte zu interpolieren oder zu extrapolieren.

Die Applikation, die in der Recheneinheit 40 läuft, hat den Hauptzweck, die AR-Inhalte so zu berechnen, dass sie lagerichtig zu der Umwelt in das Sichtfeld des Fahrers eingeblendet werden. Auch das Rendering der anzuzeigenden Bilder geschieht als Teil der Applikation in dem eingangs erwähnten 11 ms Rhythmus. Zur Ausgabe des AR-Bildes werden die aus der Virtual Reality bekannten Techniken des "Front Buffer-Rendering" und des "Low Persistence-Displaying" eingesetzt. Dabei erfolgt die Übergabe des fertig gerenderten Bildes mit einer optimierten "Rendering Pipeline". Bei dem Rendering-Prozess wird auch die Technik des "Late Latching" eingesetzt.

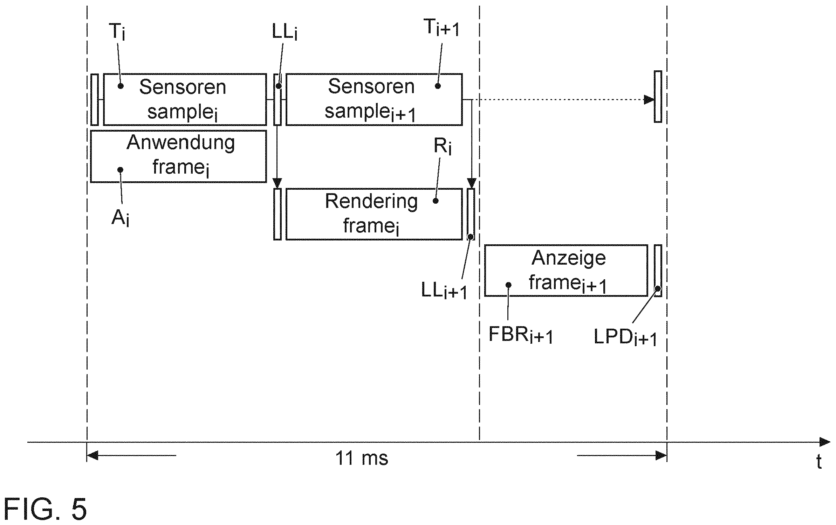

Fig. 5 zeigt noch die verschiedenen Verarbeitungszyklen zur Erzeugung der AR-Bilder. Entlang der Abszisse ist die Zeit aufgeführt. In der oberen Zeile sind zwei aufeinanderfolgende Tracking-Vorgänge Tᵢ und Tᵢ₊₁ für die verschiedenen Sensoren dargestellt. Eine Zeile darunter sind zwei Arbeitszyklen Aᵢ und Rᵢ des Anwendungsprogramms gezeigt, das von der Recheneinheit 40 abgearbeitet wird. Das Anwendungsprogramm ist praktisch zweigeteilt. In der Phase Aᵢ findet die Aktualisierung der Zustände (Sichtbarkeiten, Positionen, Inhalte, etc. von AR-Inhalten) statt. Diese Beschreibung der Anzeigen in einer virtuellen Szene ist unabhängig von den Bewegungen des Fahrzeugs und kann daher parallel zum Sampling durch die Sensoren gestartet werden.

Es erfolgt die sensorbasierte Erfassung von Längs- und Querbeschleunigung z.B. mittels IMU Messeinheit 170. Der Fahrer stellt eine Anforderung an das Fahrzeug bzgl. Lenkradwinkel, Gas- bzw. Bremspedalstellung, etc. Dies wird ebenfalls durch Sensoren erfasst. Die Applikation erstellt eine modellbasierte Bestimmung/Voraussage der Längs- und Querbeschleunigung des Fahrzeugs. Solche Rechenmodelle sind bereits bekannt und werden auch zu anderen Zwecken eingesetzt. Danach erfolgt der Abgleich oder sogar eine Fusion der vorhergesagten Daten mit den tatsächlich gemessenen Daten.

Gleichzeitig erfolgt die Ermittlung der 3D Fahrbahnoberfläche. Dies kann mittels Stereokamera und entsprechender Bildverarbeitung erfolgen. Dabei kann auch ein Zugriff auf detailliertes Kartenmaterial auf Basis von genauen Positionsdaten, z.B. aus der Real Time Kinematic [RTK] Messung erfolgen. Zur Erhöhung der Genauigkeit kann wieder ein Abgleich/Fusion der gemessenen Daten mit den Einträgen in der Karte durchgeführt werden.

Es erfolgt während der Phase LLᵢ eine Prädiktion der Rotation/Lage des Fahrzeugs. Diese Berechnung beruht ebenfalls auf einem Rechenmodell, das die Fortbewegung des Fahrzeuges beschreibt. Ebenso kann ein Rechenmodell für die Fortbewegung des Blickes des Fahrers eingesetzt werden. Die Berechnung der Lage des Fahrzeugs wird für den Anzeigezeitpunkt in Phase LDPᵢ₊₁ auf Basis der zuvor ermittelten Längs- und Querbeschleunigung, 3D Fahrbahnoberfläche sowie der bekannten Systemlaufzeiten vorausberechnet. Dies gilt ebenso für die Vorausberechnung der Blickrichtung. Die vorausberechneten Zustände werden mittels Late Latching Vorgang LLᵢ, in den Speicher geschrieben und ersetzen die zuvor gemessenen Werte für diese Größen. In der folgenden Phase Rᵢ findet das Rendering von Bild i auf Basis der auf den Anzeigezeitpunt vorausgesagten Position und Lage des Fahrzeugs und des vorausgesagten Blickwinkels des Fahrers statt.

Parallel dazu findet eine neue Messung mit Index i+1 der aktuellen Lage des Fahrzeugs durch einen Sensor mit kurzer Zykluszeit, wie z.B. der IMU-Messeinheit 170 statt. Diese Daten werden in der Phase LLᵢ₊₁ an die Nachverarbeitung (reprojection) des gerenderten Bildes weitergegeben. Es erfolgt in dieser Phase noch eine Nachverarbeitung des gerenderten Bildes frame i. Die Operation, die in dieser Phase durchgeführt wird, ist ebenfalls aus der VR Technologie bekannt und wird oft als "Time Warp Operation" bezeichnet. Das fertig gerenderte Bild i wird so zu dem Bild frame i+1 umgewandelt. Danach erfolgt in der anschließenden Phase FBRᵢ₊₁ das Schreiben der Videodaten in den Frontbuffer der Grafikkarte der HUD-Anzeigeeinheit 20. Es wird also die ebenfalls aus der VR Technologie bekannte Technik des "Front Buffer Rendering" eingesetzt. Dabei erfolgt der Bildaufbau zur Schwarzzeit des Displays. Oft wird diese Technik in Verbindung mit der Technik des "Low Persistence Displaying" eingesetzt. Dabei wird die Schwarzzeit des Displays 20 bei dieser Technik extrem verlängert. Das Bild bleibt fast über die gesamte Bildperiode dunkel getastet, nur am Ende der Bildperiode wird das Bild hellgetastet. So können Bewegungsunschärfen im Bild vermieden werden. Der Nachteil besteht allerdings darin, dass das Bild wesentlich dunkler angezeigt wird. In diesem Beispiel erfolgt die Anzeige des Bildes nur noch während einer Phase von z.B. 2ms statt 11 ms. Die Phase, während der das Bild schließlich angezeigt wird, ist in der Fig. 5 mit dem Bezugszeichen LPDᵢ₊₁ bezeichnet. Zusammengefasst lässt sich sagen, dass in der Bildperiode von 11 ms zweimal eine Sensordatenerfassung stattfindet und, das mit den Daten der ersten Datenerfassung gerenderte Bild basierend auf den Daten der zweiten Sensordatenerfassung nachbearbeitet wird und angezeigt wird.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und/oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Erfindung wird in den Ausführungsbeispielen am Beispiel des Einsatzes in Fahrzeugen genauer erläutert. Hier wird auch auf die Einsatzmöglichkeit bei Flugzeugen und Helikoptern zum Beispiel bei Landemanövern oder Sucheinsätzen etc. hingewiesen. Die Erfindung wurde am Beispiel einer HUD-Anzeigeeinheit erläutert. Die Prinzipien können aber auch auf den Einsatz bei Datenbrillen oder anderen HMD Anzeigeeinheit übertragen werden.

### Bezugszeichenliste

- 10: Fahrzeug
- 20: Head-up Display
- 22: AR-Einblendung
- 30: berührungsempfindliche Anzeigeeinheit
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 120: Telefon
- 130: Navigationsgerät
- 140: Radio
- 150: Kamera
- 152: IR-Kamera
- 160: Kommunikationsmodul
- 170: Fahrzeug-Messeinheit
- 200: Infotainment-System
- VT: Fahrzeugzustandverfolgung
- T130: Positionsverfolgung
- T152: Blickrichtungsverfolgung
- T170: Fahrzeugdynamikverfolgung
- RW: Umgebungsverfolgung
- RW150: Umgebungssensor-Auswertung
- RW130: Umgebungskarte
- SY: Synchronisation
- VS: Fahrzeugzustände
- UE: Augen des Anwenders
- Aᵢ: Applikation i
- Tᵢ: Sensorerfassung i
- Tᵢ₊₁: Sensorerfassung i+1
- LLᵢ: Übergabe des prädizierten Fahrzeugzustandes
- LLᵢ₊₁: Bildnachbearbeitung
- FBRᵢ₊₁: Front Buffer Rendering i+1
- LPDᵢ₊₁: Low Persistence Displaying i+1

## Patentansprüche

1. Verfahren zur Erzeugung einer lagerichtigen Einblendung einer Zusatzinformation auf einer Anzeigeeinheit für ein Fahrzeug, wobei das Fahrzeug (10) mit einer Anzahl von Sensoren (130, 150, 170) zur Erfassung der Umgebung und der Position und Orientierung des Fahrzeuges (10) ausgestattet ist, wobei die Daten der Sensoren (130, 150, 170) periodisch verarbeitet werden, wobei eine Vorausberechnung der Position und Orientierung des Fahrzeuges (10) erfolgt, wobei für die Vorausberechnung der Position und Orientierung des Fahrzeuges (10) ein Rechenmodell benutzt wird, bei dem die Zeitpunkte für die Erfassung der Sensordaten sowie die Systemlaufzeiten für die Verarbeitung der Sensordaten Berücksichtigung finden, wobei die vorausberechnete Position und Orientierung an einen Rendering-Prozess für die Berechnung des anzuzeigenden Bildes übergeben wird, und wobei wenigstens die Lage der Einblendung der Zusatzinformation im Anzeigebild in Abhängigkeit von der Vorausberechnung der Position und Orientierung des Fahrzeuges (10) in dem Rendering-Prozess berechnet wird, **dadurch gekennzeichnet, dass** während des Rendering-Prozesses eine nochmalige Erfassung der Position und Orientierung des Fahrzeuges (10) erfolgt, wobei eine Nachbearbeitung des in dem Rendering-Prozess fertig gerenderten Bildes durchgeführt wird, bei der der Bildinhalt mit einer Time Warp Operation transformiert wird, wobei die Transformationsrechnung durch die aktualisierte Position und Orientierung des Fahrzeuges (10) bestimmt wird.

2. Verfahren nach Anspruch 1, wobei der Zeitpunkt, für den die Position und Orientierung prädiziert werden, dem Zeitpunkt der Anzeige der Einblendung der Zusatzinformation auf der Anzeigeeinheit (20) entspricht.

3. Verfahren nach Anspruch 1 oder 2, wobei eine Blickrichtung eines Insassen des Fahrzeuges (10) durch wenigstens einen Sensor (152) erfasst wird, wobei die Blickrichtung des Insassen des Fahrzeuges (10) bei dem Rendering-Prozess für die Berechnung des anzuzeigenden Bildes berücksichtigt wird, und wobei eine Prädiktion der Blickrichtung des Fahrers erfolgt, wobei der Zeitpunkt, für den die Blickrichtung des Fahrers prädiziert wird, dem Zeitpunkt der Anzeige der Einblendung der Zusatzinformationen durch die Anzeigeeinheit (20) entspricht.

4. Verfahren nach einem der vorhergehenden Ansprüche, wobei für die Berechnung der Bilder zur Erzeugung der Einblendung der Zusatzinformationen ein Front Buffer Rendering-Prozess durchgeführt wird, bei dem das Bild direkt in den Videospeicher der Anzeigeeinheit (20) gerendert wird.

5. Verfahren nach einem der vorhergehenden Ansprüche, wobei für die Erzeugung der Einblendung der Zusatzinformationen wenigstens die Anzeigeeinheit (20) in einem "Low Persistence"-Anzeigemode betrieben wird.

6. Verfahren nach Anspruch 5, wobei für die Realisierung des "Low Persistence"-Anzeigemodus entweder ein LCD-Display verwendet wird, dessen Hintergrundbeleuchtung während des Schreibens von Daten in den Videospeicher ausgeschaltet wird, und während einer kurzen Anzeigeperiode eingeschaltet wird, oder ein OLED-Display, dessen Leuchtphase so gesteuert wird, dass sie nur während einer kurzen Anzeigeperiode zum Leuchten gebracht wird.

7. Verfahren nach Anspruch 3, wobei die Blickrichtung des Insassen des Fahrzeuges (10) mit einer Anzahl von im Fahrzeug (10) installierten IR-Kameras (152) erfasst wird, die die Position von einer Anzahl von Leuchtflecken ermitteln, die durch entsprechende Lichtquellen, die an einer Halterung am Kopf des Insassen angebracht sind, erzeugt werden.

8. Vorrichtung zur Durchführung des Verfahrens nach einem der vorhergehenden Ansprüche, aufweisend wenigstens eine Anzeigeeinheit (20), mit der Zusatzinformationen in das Sichtfeld des Insassen eines Fahrzeuges (10) eingeblendet werden können, mit einer Anzahl von Sensoren (130, 150, 170) zur Erfassung der Umgebung und der Position und Orientierung eines Fahrzeuges (10), mit einer Recheneinrichtung (40), mit der die Daten der Sensoren (130, 150, 170) periodisch verarbeitet werden, wobei die Recheneinrichtung (40) so ausgelegt ist, dass sie eine Vorausberechnung der Position und Orientierung des Fahrzeuges (10) durchführt, in der ein Rechenmodell benutzt wird, bei dem die Zeitpunkte für die Erfassung der Sensordaten sowie die Systemlaufzeiten für die Verarbeitung der Sensordaten Berücksichtigung finden, wobei die Recheneinrichtung (40) weiterhin für die Durchführung eines Rendering-Prozesses ausgelegt ist, und wobei der Rendering-Prozess so ausgelegt ist, dass darin die vorausberechnete Position und Orientierung des Fahrzeuges (10) für die Berechnung des anzuzeigenden Bildes berücksichtigt wird, **dadurch gekennzeichnet, dass** die Recheneinrichtung (40) für eine nochmalige Erfassung der Position und Orientierung des Fahrzeuges (10) ausgelegt ist und die Recheneinrichtung (40) weiterhin für eine Nachbearbeitung des fertig gerenderten Bildes ausgelegt ist, bei der der Bildinhalt mit einer Time Warp Operation transformiert wird, wobei die Transformationsrechnung durch die aktualisierte Position und Orientierung Zustand des Fahrzeuges (10) bestimmt wird.

9. Vorrichtung nach Anspruch 8, wobei die Vorrichtung wenigstens einen Sensor (152) zur Erfassung der Blickrichtung des Insassen des Fahrzeuges (10) aufweist.

10. Vorrichtung nach Anspruch 9, wobei der wenigstens eine Sensor eine Infrarot-Kamera ist, die ausgelegt ist, Leuchtflecken von einer Anzahl von Infrarot-Lichtquellen aufzunehmen, die an einer Halterung am Kopf des Insassen angebracht sind.

11. Vorrichtung nach einem der Ansprüche 8 bis 10, wobei die Recheneinrichtung (40) eine Implementierung eines Prädiktionsalgorithmus aufweist, mit dem eine Prädiktion der Blickrichtung erfolgt, wobei der Zeitpunkt, für den die Blickrichtung prädiziert wird, dem Zeitpunkt der Anzeige der Einblendung der Zusatzinformationen auf der wenigstens einen Anzeigeeinheit (20) entspricht.

12. Vorrichtung nach Anspruch 11, wobei die Recheneinrichtung (40) ausgelegt ist, das Bild für die Einblendung der Zusatzinformation in Abhängigkeit von der prädizierten Blickrichtung zu berechnen.

13. Vorrichtung nach einem der Ansprüche 8 bis 12, wobei die Anzeigeeinheit ein Head-Up-Display ist.

14. Fahrzeug, **dadurch gekennzeichnet, dass** das Fahrzeug (10) mit einer Vorrichtung nach einem der Ansprüche 8 bis 13 ausgestattet ist.

## Claims

1. Method for generating a positionally correct insertion of additional information on a display unit for a vehicle, wherein the vehicle (10) is equipped with a number of sensors (130, 150, 170) for detecting the surroundings and the position and orientation of the vehicle (10), wherein the data from the sensors (130, 150, 170) are periodically processed, wherein the position and orientation of the vehicle (10) are precalculated, wherein for the precalculation of the position and orientation of the vehicle (10) use is made of a calculation model which takes account of the points in time for the detection of the sensor data and also the system runtimes for the processing of the sensor data, wherein the precalculated position and orientation are transferred to a rendering process for the calculation of the image to be displayed, and wherein at least the location of the insertion of the additional information in the display image is calculated depending on the precalculation of the position and orientation of the vehicle (10) in the rendering process, **characterized in that** during the rendering process the position and orientation of the vehicle (10) are detected again, wherein the image rendered to completion in the rendering process is subjected to post-processing involving transformation of the image content by means of a time warp operation, wherein the transformation calculation is determined by the updated position and orientation of the vehicle (10).

2. Method according to Claim 1, wherein the point in time for which the position and orientation are predicted corresponds to the point in time of the display of the insertion of the additional information on the display unit (20).

3. Method according to Claim 1 or 2, wherein a viewing direction of an occupant of the vehicle (10) is detected by at least one sensor (152), wherein the viewing direction of the occupant of the vehicle (10) is taken into account in the rendering process for the calculation of the image to be displayed, and wherein the viewing direction of the driver is predicted, wherein the point in time for which the viewing direction of the driver is predicted corresponds to the point in time of the display of the insertion of the additional information by the display unit (20).

4. Method according to any of the preceding claims, wherein for the calculation of the images for generating the insertion of the additional information, a front buffer rendering process is carried out, in which the image is rendered directly into the video memory of the display unit (20).

5. Method according to any of the preceding claims, wherein for generating the insertion of the additional information, at least the display unit (20) is operated in a "low persistence" display mode.

6. Method according to Claim 5, wherein the "low persistence" display mode is realized using either an LCD display, the backlighting of which is switched off while data are being written to the video memory, and is switched on during a short display period, or an OLED display, the luminous phase of which is controlled such that it is caused to be luminous only during a short display period.

7. Method according to Claim 3, wherein the viewing direction of the occupant of the vehicle (10) is detected by a number of IR cameras (152) which are installed in the vehicle (10) and which ascertain the position of a number of luminous spots generated by corresponding light sources attached to a mount on the occupant's head.

8. Apparatus for carrying out the method according to any of the preceding claims, comprising at least one display unit (20) which enables additional information to be inserted into the field of view of the occupant of a vehicle (10), having a number of sensors (130, 150, 170) for detecting the surroundings and the position and orientation of a vehicle (10), having a computing device (40), which periodically processes the data from the sensors (130, 150, 170), wherein the computing device (40) is designed such that it carries out a precalculation of the position and orientation of the vehicle (10) in which use is made of a calculation model which takes account of the points in time for the detection of the sensor data and also the system runtimes for the processing of the sensor data, wherein the computing device (40) is furthermore designed for carrying out a rendering process, and wherein the rendering process is designed such that it takes account of the precalculated position and orientation of the vehicle (10) for the calculation of the image to be displayed, **characterized in that** the computing device (40) is designed for again detecting the position and orientation of the vehicle (10) and the computing device (40) is furthermore designed for post-processing of the image rendered to completion which involves transformation of the image content by means of a time warp operation, wherein the transformation calculation is determined by the updated position and orientation state of the vehicle (10).

9. Apparatus according to Claim 8, wherein the apparatus comprises at least one sensor (152) for detecting the viewing direction of the occupant of the vehicle (10).

10. Apparatus according to Claim 9, wherein the at least one sensor is an infrared camera designed to capture luminous spots from a number of infrared light sources attached to a mount on the occupant's head.

11. Apparatus according to any of Claims 8 to 10, wherein the computing device (40) comprises an implementation of a prediction algorithm which predicts the viewing direction, wherein the point in time for which the viewing direction is predicted corresponds to the point in time of the display of the insertion of the additional information on the at least one display unit (20) .

12. Apparatus according to Claim 11, wherein the computing device (40) is designed to calculate the image for the insertion of the additional information depending on the predicted viewing direction.

13. Apparatus according to any of Claims 8 to 12, wherein the display unit is a head-up display.

14. Vehicle, **characterized in that** the vehicle (10) is equipped with an apparatus according to any of Claims 8 to 13.

## Revendications

1. Procédé permettant de générer une incrustation dans une position correcte d'une information supplémentaire sur une unité d'affichage destinée à un véhicule, dans lequel le véhicule (10) est équipé d'un certain nombre de capteurs (130, 150, 170) pour détecter l'environnement et la position et l'orientation du véhicule (10), dans lequel les données des capteurs (130, 150, 170) sont traitées périodiquement, dans lequel un calcul préalable de la position et de l'orientation du véhicule (10) a lieu, dans lequel, pour le calcul préalable de la position et de l'orientation du véhicule (10), un modèle de calcul est utilisé dans lequel les instants de la détection des données de capteur ainsi que les temps de fonctionnement du système pour le traitement des données de capteur sont pris en compte, dans lequel la position et l'orientation calculées au préalable sont transférées à un processus de rendu pour le calcul de l'image à afficher, et dans lequel au moins l'emplacement de l'incrustation de l'information supplémentaire sur l'image d'affichage est calculé en fonction du calcul préalable de la position et de l'orientation du véhicule (10) dans le processus de rendu,
**caractérisé en ce que** pendant le processus de rendu, une nouvelle détection de la position et de l'orientation du véhicule (10) a lieu, dans lequel un post-traitement de l'image rendue finie dans le processus de rendu est effectué au cours duquel le contenu d'image est transformé par une opération de distorsion temporelle, dans lequel le calcul de transformation est déterminé par la position et l'orientation du véhicule (10) mises à jour.

2. Procédé selon la revendication 1, dans lequel l'instant auquel la position et l'orientation sont prédites correspond à l'instant de l'affichage de l'incrustation de l'information supplémentaire sur l'unité d'affichage (20).

3. Procédé selon la revendication 1 ou 2, dans lequel une direction de visée d'un occupant du véhicule (10) est détectée par au moins un capteur (152), dans lequel la direction de visée de l'occupant du véhicule (10) est prise en compte lors du processus de rendu pour le calcul de l'image à afficher, et dans lequel une prédiction de la direction de visée du conducteur a lieu, dans lequel l'instant auquel la direction de visée du conducteur est prédite correspond à l'instant de l'affichage de l'incrustation des informations supplémentaires par l'unité d'affichage (20).

4. Procédé selon l'une quelconque des revendications précédentes, dans lequel pour le calcul des images destinées à la génération de l'incrustation des informations supplémentaires, un processus de rendu de tampon frontal est effectué au cours duquel l'image est rendue directement dans la mémoire vidéo de l'unité d'affichage (20).

5. Procédé selon l'une quelconque des revendications précédentes, dans lequel au moins l'unité d'affichage (20) fonctionne dans un mode d'affichage à basse persistance pour la génération de l'incrustation des informations supplémentaires.

6. Procédé selon la revendication 5, dans lequel pour la réalisation du mode d'affichage à basse persistance, on utilise soit un affichage LCD dont le rétroéclairage est désactivé pendant l'écriture de données dans la mémoire vidéo et qui est activé pendant une courte période d'affichage, soit un affichage OLED dont la phase luminescente est commandée de telle sorte qu'elle ne s'illumine que pendant une courte phase d'affichage.

7. Procédé selon la revendication 3, dans lequel la direction de visée de l'occupant du véhicule (10) est détectée par un certain nombre de caméras IR (152) installées dans le véhicule (10) et qui établissent la position d'un certain nombre de points lumineux qui sont générés par des sources de lumière correspondantes qui sont montées sur un support sur la tête de l'occupant.

8. Dispositif permettant d'exécuter le procédé selon l'une quelconque des revendications précédentes, présentant au moins une unité d'affichage (20) qui permet d'incruster des informations supplémentaires dans le champ de vision de l'occupant d'un véhicule (10), comprenant un certain nombre de capteurs (130, 150, 170) pour détecter l'environnement et la position et l'orientation d'un véhicule (10), comprenant un dispositif de calcul (40) qui permet de traiter périodiquement les données des capteurs (130, 150, 170), dans lequel le dispositif de calcul (40) est conçu de telle sorte qu'il exécute un calcul préalable de la position et de l'orientation du véhicule (10) au cours duquel un modèle de calcul est utilisé dans lequel les instants destinés de détection des données de capteur ainsi que les temps de fonctionnement du système pour le traitement des données de capteur sont pris en compte, dans lequel le dispositif de calcul (40) est en outre conçu pour exécuter un processus de rendu, et dans lequel le processus de rendu est conçu de telle sorte qu'il tient compte de la position et de l'orientation du véhicule (10) calculées au préalable pour le calcul de l'image à afficher,
**caractérisé en ce que** le dispositif de calcul (40) est conçu pour une nouvelle détection de la position et de l'orientation du véhicule (10), et le dispositif de calcul est en outre conçu pour un post-traitement de l'image rendue finie dans lequel le contenu d'image est transformé par une opération de distorsion temporelle, dans lequel le calcul de transformation est déterminé par la position et l'état d'orientation du véhicule (10) mises à jour.

9. Dispositif selon la revendication 8, dans lequel le dispositif présente au moins un capteur (152) pour détecter la direction de visée de l'occupant du véhicule (10).

10. Dispositif selon la revendication 9, dans lequel ledit au moins un capteur est une caméra infrarouge qui est conçue pour enregistrer des points lumineux d'un certain nombre de sources de lumière infrarouge qui sont montées sur un support sur la tête de l'occupant.

11. Dispositif selon l'une quelconque des revendications 8 à 10, dans lequel le dispositif de calcul (40) présente une mise en œuvre d'un algorithme de prédiction qui permet d'effectuer une prédiction de la direction de visée, dans lequel l'instant auquel la direction de visée est prédite correspond à l'instant de l'affichage de l'incrustation des informations supplémentaires sur ladite au moins une unité d'affichage (20).

12. Dispositif selon la revendication 11, dans lequel le dispositif de calcul (40) est conçu pour calculer l'image pour l'incrustation des informations supplémentaires en fonction de la direction de visée prédite.

13. Dispositif selon l'une quelconque des revendications 8 à 12, dans lequel l'unité d'affichage est un affichage tête haute.

14. Véhicule, **caractérisé en ce que** le véhicule (10) est équipé d'un dispositif selon l'une quelconque des revendications 8 à 13.
